Europäisches Patentamt

European Patent Office

Office européen des brevets

(11) Publication number: **0 517 189 A1**

## EUROPEAN PATENT APPLICATION

(21) Application number: 92109390.2

(22) Date of filing: 03.06.92

(51) Int. Cl.5: **B01J 20/28**, B01J 20/20

(30) Priority: **03.06.91 JP 159594/91**

(43) Date of publication of application:
**09.12.92 Bulletin 92/50**

(84) Designated Contracting States:
**DE FR GB IT**

(71) Applicant: **KURARAY CO., LTD.**
**1621 Sakazu**
**Kurashiki-City(JP)**

(72) Inventor: **Shima, Toshiaki**
**1660, Sakazu**
**Kurashiki-city, Okayama(JP)**
Inventor: **Ohtsuka, Kiyoto**
**5-3-336, Besshonakanomachi**
**Takatsuki-city, Osaka(JP)**
Inventor: **Tsumura, Takayuki**
**11-6-8, Shoshinmachi**
**Kurashiki-city, Okayama(JP)**

(74) Representative: **Vossius & Partner**
**Siebertstrasse 4 P.O. Box 86 07 67**
**W-8000 München 86(DE)**

(54) **Sheet containing activated carbon fiber, process for producing the same and use of the same.**

(57) Provided are a sheet having a high strength, a specific surface area of at least 300 $m^2/g$ and a coefficient of volume expansion of at least 130% and obtained by compressing a mixture of an activated carbon fiber and a fibrous or particulate thermoplastic resin at a temperature of at least the thermal deformation temperature of said thermoplastic resin and under pressure, and an article having excellent adsorption capacity and obtained by expanding a primary shaped article such as said sheet or processed products thereof. The expansion is conducted by heating said primary shaped article at a temperature of at least the thermal deformation temperature of said thermoplastic resin. Also provided is use of said article.

EP 0 517 189 A1

The present invention relates to a sheet containing activated carbon fiber (hereinafter sometimes referred to as ACF"), a process for its production and its use.

Known ACF's are polyacrylonitrile-, phenol resin-, rayon-, pitch-based ones and the like. They have higher rate of adsorption and desorption than that possessed by granular activated carbon and are therefore used for removing bad-odor components, recovering solvents and like purposes, in the gaseous or liquid phase.

ACF's are used in the form of tows, spun yarns, staples, woven fabrics, nonwoven fabrics and the like. Among these, woven fabrics and nonwoven fabrics are prepared by a process which comprises processing a carbon fiber or a precursor fiber into a woven or nonwoven fabric, and then, after as required carbonizing the fabric, activating it; a process which comprises forming an ACF directly into a nonwoven fabric by needle-punching; or like processes. Japanese Patent Application Laid-open Nos. 135359/1988 and 216736/1988 disclose an adsorbent sheet obtained by laminating a sheet comprising a synthetic fiber or a metal fiber and a nonwoven fabric prepared by mixing an ACF and a sheath-core composite fiber comprising a core component of a high melting synthetic resin and a sheath component of a low melting synthetic resin, forming the mixture into a web and then heating the web to adhere the contact points between the two fibers. Japanese Patent Application Laid-open No. 203749/1988 discloses a hollow-cylindrical adsorbent article obtained by dewatering a uniform aqueous slurry containing an ACF and a fusible synthetic fiber in a mold to form a hollow cylinder and then heating the obtained hollow cylinder to adhere the two fibers.

However, the process which comprises processing a carbon fiber or a precursor fiber into a woven or nonwoven fabric and then, after as required carbonizing the fabric, activating the fabric has the drawback of high production cost per unit weight of the obtained woven or nonwoven fabric of ACF. This is because that although the processing into a woven or nonwoven fabric requires relatively high cost, the fabric reduces its weight very much to, generally, 5-40% of the original weight during the activation treatment or the carbonization and activation treatment. The process of direct formation into a nonwoven fabric has the drawback of large processing loss due to pulverization of ACE on needle-punching. The above adsorbent sheet comprising a laminate of a nonwoven fabric prepared by forming a mixture of a composite fiber and an ACF into a sheet and heating the sheet to adhere the two fibers, and another sheet has the drawback of low adsorption capacity per unit volume due to low content per volume of ACF. The above adsorbent article obtained by dewatering an aqueous slurry comprising an ACF and a fusible synthetic fiber and heating the resulting hollow cylinder to adhere the two fibers has the drawback that, as described in Japanese Patent Application Laid-open No. 203749/1988, it tends to break upon housing into a container due to its low strength. Reinforcement with a non-fusible fiber therefore becomes necessary for practical purposes. The article has another drawback of low productivity because it takes a long time to dry up, in the heating and binding process, an intermediate product of wet hollow cylindrical article obtained from an aqueous slurry due to its complex shape and high water content.

In view of the foregoing, requirements for a desirable shaped article of ACF are:

(1) It can be produced, not from carbon fibers before activation or precursor fibers, but by using an ACF and collecting it with no loss thereof; and

(2) Upon usage, it can be housed in the desired container without being damaged even when used neither in the form of a laminate with other sheets nor in combination with a reinforcing fiber, both of which decrease the adsorption function per unit volume or unit weight.

Accordingly, an object of the present invention is to provide a shaped article that can be produced by collecting an ACF without its loss and can be housed in the desired container without being damaged even when not laminated with other sheets or used in combination with a reinforcing fiber.

Another object of the present invention is to provide a process for producing such a shaped article and use of the shaped article.

According to the present invention, one of the above objects can be achieved by providing a sheet having a specific surface area of at least 300 $m^2$/g and a coefficient of volume expansion of at least 130% and comprising an activated carbon fiber and a fibrous or particulate thermoplastic resin, individual fibers of said activated carbon fiber being bonded to each other via said thermoplastic resin.

Another one of the above objects can be achieved by providing a process for producing a sheet having a specific surface area of at least 300 $m^2$/g and a coefficient of volume expansion of at least 130% and comprising an activated carbon fiber and a fibrous or particulate thermoplastic resin, individual fibers of said activated carbon fiber being bonded to each other via said thermoplastic resin, which comprises:

mixing an activated carbon fiber and a fibrous or particulate thermoplastic resin,

compressing the mixture at a temperature of at least the thermal deformation temperature of said thermoplastic resin and under a pressure per area of at least 0.1 kg/cm$^2$ or a linear pressure of at least 1.0 kg/cm, to obtain a flat, compressed article, and

cooling the flat, compressed article under pressure.

Still another one of the above objects can be achieved by providing:

a process for producing an article which comprises expanding a primary shaped article having a specific surface area of at least 300 $m^2/g$ and a coefficient of volume expansion of at least 130% and comprising an activated carbon fiber and a fibrous or particulate thermoplastic resin, individual fibers of said activated carbon fiber being bonded to each other via said thermoplastic resin, by heating said primary shaped article at a temperature of at least the thermal deformation temperature of the thermoplastic resin;

the article thus produced and

an adsorbent material comprising the article.

Any ACF can be used in the present invention and selected according to the intended use or purpose of the finished adsorbent material. The ACF is produced by infusibilizing and then as required carbonizing a polyacrylonitrile-based, rayon-based, phenol resin-based, charcoal pitch-based, petroleum pitch-based or like fibers, and activating the resulting fiber by maintaining it at a prescribed temperature for a prescribed time under an atmosphere containing water vapor and carbon dioxide.

The ACF used in the invention has a fiber diameter of generally 5 to 30 $\mu$m and preferably 10 to 20 $\mu$m and a fiber length of generally 1 to 100 mm and preferably 2 to 20 mm. It is desirable to use an ACF having a specific surface area of 300 to 2,500 $m^2/g$ and a mean pore radius of 5 to 30 angstroms.

If the ACF has a fiber diameter of less than 5 $\mu$m, an adsorbent material comprising the resulting article will tend to have a too high gas-flow or liquid-flow resistance. On the other hand, with the fiber diameter exceeding 30 $\mu$m, the fiber will tend to break during pressing of its aggregate into the sheet form and become hence difficult to process.

If the ACF has a fiber length of less than 1 mm, the resulting sheet will tend to have a low coefficient of volume expansion and a low mechanical strength. If the fiber length exceeds 100 mm, it will become difficult to mix the fiber uniformly with a fibrous or particulate thermoplastic resin. In the present invention, the fiber diameter and length are not necessarily uniform but they may be non-uniform.

The specific surface area and mean pore radius of the ACF varies depending on the activation conditions employed and can be suitably selected according to the intended use of the resulting article or the material to be adsorbed. There may be used 2 or more types of ACF's having different mean pore radii.

The ACF used in the invention may have either straight or curved shape, it has preferably a curved shape because of the obtained sheet having an increased coefficient of volume expansion. Curved ACF is obtained by, for example, melt blowing process.

Examples of the thermoplastic resin used in the invention are homopolymers and copolymers of polyolefins, e.g. polyethylene, polypropylene and ethylene-propylene copolymers, polyesters, e.g. polyethylene terephthalate and polybutylene terephthalate, polyurethanes, polyamides, polyacetals, polyphenylene sulfides, polystyrene and fluoro-resins. These resins can be used singly or in combination of 2 or more.

It is necessary that the thermoplastic resin be in the form of either fiber or powder. Use of the fibrous or particulate thermoplastic resin as a binder realizes bonding of individual ACF fibers to each other with only part of their surfaces covered with the thermoplastic resin, which minimizes clogging of the pores of the ACF so that the adsorption capacity inherent to ACF will not decrease to a large extent. The particulate thermoplastic resin used preferably has a particle diameter of 10 to 500 $\mu$m, more preferably 10 to 100 $\mu$m, and the fibrous thermoplastic resin preferably has a fiber diameter of 1 to 50 $\mu$m, more preferably 10 to 50 $\mu$m and a fiber length of 1 to 100 mm, more preferably 3 to 30 mm. The fibrous thermoplastic resin may be a sheath-core composite fiber comprising a sheath component of a low melting thermoplastic resin and a core component of high melting thermoplastic resin.

The fibrous thermoplastic resin may be provided with crimps to increase the coefficient of volume expansion of the obtained sheet.

In the present invention, 2 or more types of fibrous or particulate thermoplastic resins can be used.

In the sheet of the present invention, the fibrous thermoplastic resin used is present substantially in the form of fiber, while being somewhat deformed due to fusion at bonding points with ACF or between the fibers though. In the sheet of the present invention, the particulate thermoplastic resin used is present substantially in the form of powder, while being somewhat deformed at bonding points with ACF or between the particles.

It is desirable that the fibrous or particulate thermoplastic resin be added to ACF in an amount of 0.5 to 50% by weight based on the weight of the resulting sheet, more preferably 1.5 to 30% by weight on the same basis. If the addition amount is less than 0.5% by weight, the resulting sheet will tend to have a low strength and low function of maintaining its shape. If the amount is more than 50% by weight, the adsorbent article eventually obtained will tend to have a high gas- or liquid-flow resistance due to increase in the ratio of bonding points between the fibers or particles of the thermoplastic resin.

The sheet of the present invention may have any thickness, but generally the thickness is 0.1 to 10 mm.

The process for producing the sheet of the present invention is now described in detail. At first, an ACF and a fibrous or particulate thermoplastic resin are mixed in a prescribed ratio, by either dry system or wet system. The mixture may contain, within limits not to impair the properties of the resulting sheet, additives, e.g. a dispersing agent, a stabilizer, a granular activated carbon, a filler such as mica, alumina, talc and silica, and a foaming agent. The mixture, being preferably in the form of a web, is then heated at a temperature of at least the thermal deformation temperature of the thermoplastic resin, preferably in the range from 10°C higher than the thermal deformation temperature to 20°C higher than the melting point or softening point of the thermoplastic resin and, at the same time, compressed under a pressure per area of at least 0.1 kg/cm$^2$, preferably at least 0.5 g/cm$^2$, or a linear pressure of at least 1.0 kg/cm, preferably at least 2.0 kg/cm. The thus compressed mixture is then, while being pressed, cooled to give the sheet of the present invention.

The compression time is suitably selected depending on other compression conditions such as heating temperature and the intended properties of the sheet. Higher heating temperature allows the compression time to be shortened. The heating under pressure may be conducted by any optional process. Examples of the hot pressing process include hot plate pressing, hot roll pressing, a process which comprises passing the above mixture between a hot roll and a belt extending on and around the roll and a process which comprises passing the above mixture between a roll and a heated belt extending on and around the roll. Pressing conditions are suitably selected in terms of pressure per area for areal pressing such as the above hot plate pressing, the process utilizing a hot roll in combination with a surrounding belt or the process utilizing a roll in combination with a surrounding heated belt. On the other hand, the concept of linear pressure applies when pressing conditions are selected for linear application of pressure such as the above hot roll pressing.

The cooling under pressure can be conducted by any optional process including cold plate pressing, cold roll pressing and a process utilizing a combination of a roll and a belt. It is desirable that the cooling be conducted under a pressure condition in the same range as that for the above hot pressing. It is sufficient to conduct the cooling until the temperature of the compressed sheet-like article reaches a temperature at which the article does not substantially expand in the thickness direction when released from the pressing. To achieve this condition, the compressed sheetlike article is generally placed under the pressure until its temperature reaches below the melting point or softening point of the thermoplastic resin. Where the thermoplastic resin is a crystalline resin, the article is preferably placed under the pressure until its temperature reaches below the thermal deformation temperature of the crystalline resin. The cooling rate is not specifically limited, and either forced rapid cooling or gradual cooling under natural conditions may be employed.

The sheet can also be produced by employing a system similar to the post-part of a continuous paper manufacturing machine.

The thermal deformation temperature of a thermoplastic resin used and constituting the base of the above heating and cooling conditions means that of, among the components of the fiber or powder of the thermoplastic resin used, one participating in the bonding of ACF. Likewise, the melting point and softening point of a thermoplastic resin used and constituting the bases of the above heating and cooling conditions mean the melting point and softening point, respectively, of, among the components of the fiber or powder of the thermoplastic resin used, one participating in the bonding of ACF. For example, where a sheath-core composite fiber comprising a sheath component of a low melting thermoplastic resin and a core component of a high melting thermoplastic resin is used as the fibrous thermoplastic resin, the thermal deformation temperature and melting point or softening point of the thermoplastic resin constituting the sheath component become the bases of the heating and cooling conditions.

It is necessary that the sheet of the present invention thus obtained have the property of expanding when heated and have a specific surface area of at least 300 m$^2$/g and a coefficient of volume expansion of at least 130%. If the specific surface area is less than 300 m$^2$/g, articles produced from the sheet will have a small specific surface area and hence exhibit insufficient adsorption capacity. If the coefficient of volume expansion is less than 130%, the sheet will generally have a low strength and tend to break during handling thereof and the finished article obtained by heating the sheet will sometimes have inferior dimensional accuracy. The sheet of the present invention more preferably has a specific surface area of 700 to 2,500 m$^2$/g in view of adsorption capacity, and a coefficient of volume expansion of 140 to 400% in view of strength and handleability. The sheet has a bulk density of preferably in a range of 0.1 to 0.4 g/cc. The specific surface area of the obtained sheet increases with the specific surface area and incorporation ratio of the ACF used, and the coefficient of volume expansion of the sheet increases with the pressure applied upon the compression process, the fiber length of the ACF and the curving degree of individual fibers of the ACF and the fibrous thermoplastic resin used. Appropriate selection of these conditions realizes production of a sheet having the desired specific surface area and coefficient of volume expansion.

The sheet of the present invention may incorporate a reinforcing fiber within an amount not to impair the properties of the obtained sheet. Examples of usable reinforcing fibers are inorganic fibers such as glass fiber, carbon fiber and alumina fiber, synthetic fibers such as polyamide fibers and semi-synthetic fibers such as cellulosic fibers, as well as microfibrillated fibers.

The article of the present invention is described next. The article is produced by a process which comprises expanding a primary shaped article having a specific surface area of at least 300 $m^2/g$ and a coefficient of volume expansion of at least 130% and comprising an ACF and a fibrous or particulate thermoplastic resin, individual fibers of the ACF being bonded to each other via the thermoplastic resin, by heating the primary shaped article at a temperature of at least the thermal deformation temperature of the thermoplastic resin, preferably at a temperature within the range of from the thermal deformation temperature to 40°C higher than the melting point or softening point of the thermoplastic resin. As the primary shaped article, there can be used the above sheet of the present invention as it is or after being processed into other forms, such as square-cut small pieces, several-millimeter chips, laminates, solid and hollow cylinders obtained by winding the sheet in plies and like processed products. The expansion by heating is conducted in a closed space that regulates the maximum volume, preferably in a mold, whereby the article is formed into the shape corresponding to that of the mold. Appropriate selection of the ratio of expansion, as determined by the volume ratio between the mold and the primary shaped article to be placed therein, leads to production of a finished article having the desired bulk density. Any ratio of expansion may be employed in the heating expansion insofar as it is not more than the coefficient of volume expansion of the primary shaped article used.

The thermal deformation temperature, melting point and softening point of the thermoplastic resin used and constituting the bases of the temperature condition in the above heating expansion mean, same as with heating and cooling for the production of the sheet of the present invention, those of, among the components of the fiber or powder of the thermoplastic resin, one participating in the bonding with ACF.

That the article thus obtained has open cells passing through from one of its surface to the other and a porosity of at least 75% assures, when it is used as an adsorbent material, effective development of the adsorption capacity inherent to ACF. To this end, more preferably the porosity is in a range of 80 to 96%. The desired porosity can be obtained by suitably controlling the degree of expansion.

Where a fibrous thermoplastic resin is used in the sheet of the present invention, the resulting article generally has higher mechanical strength than that of conventional ACF nonwoven fabrics, because the article containing the resin still maintaining the fiber form.

The article may have the shape of a flat plate, curved plate, solid or hollow cylinder, sphere, semi-sphere and the like, and also combination of the same or different types of these shapes.

Expansion by heating of a primary shaped article such as the sheet of the present invention in a mold having the desired shaped provides an article having a good dimensional accuracy because the expansion proceeds so as to fit closely the inside of the mold.

When a liquid or gas is passed through the article of the present invention, in which individual ACF's are firmly bonded with a thermoplastic resin, the bulk density of the article hardly becomes non-uniform. This fact suppresses the increase in the liquid- or gas-flow resistance with time and realizes long-period maintenance of the adsorption capacity, when the article is used as an adsorbent material.

The article of the present invention can be provided with higher bulk density (i.e. smaller specific volume) than that of conventional nonwoven-shaped aggregates of ACF. This is advantageous also in view of handleability.

The article of the present invention, containing ACF, can be used for known applications where ACF in general is used. Examples of such applications include removal of trace components from liquids, decomposition of residual chlorine in water and removal of volatile solvents from gases. More concretely, the article of the present invention, is used in a wide variety of fields, e.g. as an adsorbent material of water purifiers (utilizing its functions to decompose residual chlorine, to remove trihalomethanes by adsorption, and the like) and a filter of solvent recovery systems, and for decoloration or removal of bad-smelling substances of oils or fats, decoloration or removal of bad-smelling substances during brewing of alcoholic beverage and like purposes.

An embodiment of adsorbent materials comprising the article of the present invention is a specific adsorbent material cartridge for water purifier. This cartridge is prepared by expanding by heating a primary shaped article in a container having the desired shape and includes the container itself and the expanded body with its outer surface being in close contact with the inner wall of the container. For example, at least 2 types of sheets containing ACF's having different mean pore radii are wound in several plies on a core to form a primary shaped article. The primary shaped article is then placed in a hollow cylindrical container, heated therein and cooled to give an ACF aggregate with its surface closely contacting the inner wall surface of the container. The thus obtained cartridge, utilizing at least 2 ACF's having different mean pore radii, has a wide pore radius distribution. The cartridge therefore can, when used to filter industrial waste waters or tap waters containing various components to remove, adsorb these components very effectively.

Having generally described this invention, a further understanding can be obtained by reference to certain specific examples which are provided herein for purpose of illustration only and are not intended to be limitative of this invention unless otherwise specified.

In the Examples and Comparative Examples that follow, the properties of sheets and articles were measured according to the following methods.

(1) Thermal deformation temperature (°C)

A specimen of the same thermoplastic resin as the fibrous or particulate thermoplastic resin to be measured is prepared by injection molding the resin and heat treating the molded resin (for a sheath-core composite fiber, the same resin as that constituting the sheath is used as specimen; for a crystalline resin sufficiently crystallized specimen should be prepared). The specimen is measured for thermal deformation temperature corresponding to the maximum bending stress of 18.6 kg·f/cm$^2$, according to JIS K7207.

(2) Melting point (°C)

A specimen of the fibrous or particular thermoplastic resin itself is used. (For a sheath-core composite fiber, the same resin as that constituting the sheath is used as specimen). The specimen is heated with a differential thermal analyzer at a prescribed temperature elevation rate to obtain a DTA curve. From the curve, the endothermic peak temperature is read, to be the melting point.

(3) Coefficient of volume expansion (%)

A sheet sample is cut to a prescribed length and width, to give specimens. The specimen is measured for the thickness ($T_0$ mm) at room temperature with a thickness gauge under an initial load of 100 g/cm$^2$ according to JIS L1096. The same specimen is heated with hot air at a temperature of 5°C higher than the melting point measured above in (2) under no load for 10 minutes and immediately thereafter air-cooled. The thus treated specimen is measured for the thickness (t mm) in the same manner as above. Then:

Coefficient of volume expansion (%) = $(t/t_0)$ x 100

(4) Bulk density (g/cm$^3$)

Calculated from the weight and the size of the sheet or article. The thickness of sheet samples are measured in the same manner as above item (3).

(5) Breaking length (km)

A sheet sample is measured for tensile strength (F kg) with a constant-extension-rate tensile tester according to JIS P8113. From the width (B mm) of the specimen subjected to the tensile test and the weight (W g/m$^2$) of the sheet:

Breaking length (km) = F x 1000/(B x W)

where
    F =     tensile strength of the specimen (kg)
    B =     width of the specimen (mm)
    W =     weight of the sheet (g/m$^2$).

(6) Specific surface area (m$^2$/g)

Measured by BET one point method with adsorbed substance of nitrogen.

(7) Porosity (%)

Determined as follows.

Porosity (%) = (1 - d x v/w) x 100

where

d = bulk density of the article (g/cm$^3$)
v = true volume of the ACF and thermoplastic resin constituting the article (cm$^3$)
w = weight of the article (g)

(8) Adsorption capacity (% by weight)

Represented by the equilibrium adsorption amount of benzene measured according to JIS K1474.

(9) Retention of adsorption capacity (%)

Determined as follows.

Retention of adsorption capacity = $D \times 10^4/(D_0 \times W_A)$

where

D = equilibrium adsorption amount of benzene in the article (% by weight)
$D_0$ = equilibrium adsorption amount of benzene in ACF (% by weight)
$W_A$ = amount of ACF incorporated (% by weight)

Example 1

In 2 liters of water, 9.1 g of a phenol resin-based activated carbon fiber having a specific surface area of 1,500 m$^2$/g (as shown in Table 1) and 1.6 g of the drawn polyethylene terephthalate fiber shown in Table 2 were homogeneously mixed with a standard disintegrator (JIS P8209-1976). After 2.5 minutes of mixing operation, the slurry was formed into a sheet-like aggregate with a sheet machine (modified one of a machine as specified in JIS P8209-1976).

The sheet-like aggregate thus obtained was sandwiched between a pair of Teflon sheets and compressed at a temperature of 255°C and under a pressure of 8 kg/cm$^2$ for 3 minutes. Then the sheet-like aggregate was, while being under pressure, cooled to give a sheet. The obtained sheet had a thickness of 0.75 mm, a bulk density of 0.23 g/cm$^3$, a specific surface area of 1,170 m$^2$/g, a coefficient of volume expansion of 380% and a breaking length of 0.29 km. The sheet was processed on a slitter and checked for slittability. It was able to be smoothly slit.

The sheet was expanded to 270% of the original volume by maintaining it between a pair of steel plate with a prescribed clearance and heated at a temperature of 255°C, for 3 minutes. The obtained sheet-like article had a bulk density of 0.09 g/cm$^3$ and a porosity of 93%. The article was tested for equilibrium adsorption amount of benzene, which was found to be 35% by weight. The retention of adsorption capacity was 94%.

Reference Example

A phenol resin-based activated carbon fiber nonwoven fabric (Kynol ACN211-15, made by GUN EI CHEMICAL INDUSTRY CO., LTD.) having a specific surface area of 1,500 m$^2$/g and a weight of 180 g/m$^2$ was tested. Although it showed a bulk density and an equilibrium adsorption amount of benzene of 0.07 g/cm$^3$ and 45% by weight respectively, it had a low breaking length of 0.1 km.

Examples 2 through 8

Phenol resin-based activated carbon fibers as shown in, Table 1 and drawn polyethylene terephthalate fibers as shown in Table 2 were each mixed in ratios as shown in Tables 1 and 2 and formed into a series

7

of sheet-like aggregates in the same manner as in Example 1. The sheet-like aggregates obtained were each sandwiched between Teflon sheets and compressed under conditions as shown in Table 3, to give sheets. The properties of the sheets thus obtained are shown in Table 3. These sheets were also checked for slittability. They were able to be slit smoothly.

The sheets were expanded under the conditions shown in Table 4. The sheet-like articles obtained had properties as shown in Table 4. All the articles had sufficient adsorption capacity for practical purposes.

### Example 9

A sheet-like aggregate was prepared in the same manner as in Example 1, from 7.4 g of a curved activated carbon fiber (shown in Table 1) having a specific surface area of 1,900 $m^2$/g and obtained from an isotropic pitch-based fiber and 3.2 g of an undrawn polyethylene terephthalate fiber as shown in Table 2. The sheet-like aggregate thus obtained was compressed under conditions as shown in Table 3, to give a sheet. The obtained sheet had a bulk density of 0.18 $g/cm^3$, a specific surface area of 1,200 $m^2$/g, a coefficient of volume expansion of 140% and a breaking length of 0.50 km. The sheet was also tested for slittability. It was able to be slit smoothly.

The sheet was expanded under the conditions shown in Table 4, to give a sheet-like article. The obtained sheet-like article had a bulk density of 0.14 $g/cm^3$ and a porosity of 88%. The article was tested for equilibrium adsorption amount of benzene, which was found to be 38% by weight. The retention of adsorption capacity was 88%.

### Comparative Example 1

Example 1 was repeated except that the sheet-like aggregate was compressed at a temperature of 275°C and under a pressure of 0.05 $kg/cm^2$, for 3 minutes to obtain a sheet. The sheet thus obtained had a bulk density of 0.045 $g/cm^3$, a specific surface area of 1,180 $m^2$/g and a coefficient of volume expansion of 120%. The sheet however had a breaking length of only 0.08 km and, when tested for slittability, could not be slit well because it was too soft.

### Comparative Example 2

Example 1 was repeated except for using a phenol resin-based activated carbon fiber having a fiber length of 0.8 mm, to obtain a sheet-like aggregate. The sheet-like aggregate was compressed at 270°C and under a pressure of 8 $kg/cm^2$ for 2.5 minutes, and then, while being under pressure, cooled to give a sheet. The sheet thus obtained had a bulk density of 0.43 $g/cm^3$, a specific surface area of 1,160 $m^2$/g and a coefficient of volume expansion of 120%. The sheet however had a breaking length of only 0.05 km. The sheet tended to break when handled and, when tested for slittability, broke upon slitting because it was too hard and brittle.

### Example 10

Example 1 was repeated except that an isotropic pitch-based activated carbon fiber having a specific surface area of 1,480 $m^2$/g as shown in Table 1 was used, to obtain a sheet. The obtained sheet had a bulk density of 0.23 $g/cm^3$, a specific surface area of 1,170 $m^2$/g, and a coefficient of volume expansion of 450%.

The sheet was expanded to a volume of 390% of the original in a manner similar to that in Example 1 and at 255°C for 3 minutes. The obtained sheet-like article had a bulk density of 0.06 $g/cm^3$ and a porosity of 96%. The article was tested for equilibrium adsorption amount of benzene, which was found to be 47% by weight. The retention of adsorption capacity was 92%.

### Examples 11 through 13

Example 1 was repeated except for using instead of the drawn polyethylene terephthalate fiber, as shown in Table 2, an undrawn polyethylene terephthalate fiber (Example 11), a sheath-core composite fiber comprising a core component of polyethylene terephthalate and a sheath component of polypropylene (Example 12), or a polyphenylene sulfide powder (Example 13), to obtain sheet-like aggregates. The sheet-like aggregates thus obtained were each sandwiched between Teflon sheets and compressed under conditions as shown in Table 3, to give sheets. The sheets thus obtained were expanded under conditions as shown in Table 4, to give corresponding articles.

8

The properties of the sheets and the articles are shown in Tables 3 and 4.

Table 1

| | | Activated carbon fiber | | | | |
|---|---|---|---|---|---|---|
| | Type | Specific surface area | Fiber dia- meter | Fiber length | Amount added | |
| | | $(m^2/g)$ | $(\mu m)$ | (mm) | (g) | (% by weight) |
| Example 1 | Phenol resin- based | 1500 | 13 | 10 | 9.1 | 85 |
| ″ 2 | ″ | 1500 | 13 | 15 | 10.9 | 90 |
| ″ 3 | ″ | 2000 | 12 | 15 | 11.6 | 97 |
| ″ 4 | ″ | 2500 | 12 | 10 | 6.5 | 60 |
| ″ 5 | ″ | 700 | 13 | 10 | 9.1 | 85 |
| ″ 6 | ″ | 1500 | 7 | 10 | 9.1 | 85 |
| ″ 7 | ″ | 1500 | 20 | 10 | 9.1 | 85 |
| ″ 8 | ″ | 1500 | 13 | 20 | 9.1 | 85 |
| ″ 9 | Isotro- pic pitch- based | 1900 | 13 | 10 | 7.4 | 70 |
| Comparative Example 1 | Phenol resin- based | 1500 | 13 | 10 | 9.1 | 85 |
| ″ 2 | ″ | 1500 | 13 | 0.8 | 9.1 | 85 |
| Example 10 | Isotro- pic pitch- based | 1480 | 12 | 10 | 9.1 | 85 |
| ″ 11 | Phenol resin- based | 1500 | 13 | 10 | 9.1 | 85 |
| ″ 12 | ″ | 1500 | 13 | 10 | 9.1 | 85 |
| ″ 13 | ″ | 1500 | 13 | 10 | 9.1 | 85 |

9

Table 2

| | 1) Type | Thermoplastic resin | | | | | Amount added | |
| | | Fiber diameter | Fiber length | Particle diameter | thermal deform. temp. | melting temp. | | |
| | | (μm) | (mm) | (μm) | (°C) | (°C) | (g) | (% by weight) |
| Example 1 | Oriented PET | 13 | 10 | - | 80 | 255 | 1.6 | 15 |
| ʼ 2 | ʼ | 13 | 3 | - | 80 | 255 | 1.2 | 10 |
| ʼ 3 | ʼ | 13 | 20 | - | 80 | 255 | 0.4 | 3 |
| ʼ 4 | ʼ | 17 | 10 | - | 80 | 255 | 4.3 | 40 |
| ʼ 5 | ʼ | 13 | 10 | - | 80 | 255 | 1.6 | 15 |
| ʼ 6 | ʼ | 17 | 3 | - | 80 | 255 | 1.6 | 15 |
| ʼ 7 | ʼ | 13 | 10 | - | 80 | 255 | 1.6 | 15 |
| ʼ 8 | ʼ | 13 | 80 | - | 80 | 255 | 1.6 | 15 |
| ʼ 9 | Unoriented PET | 12 | 10 | - | 80 | 255 | 3.2 | 30 |
| Comparative Example 1 | Oriented PET | 13 | 10 | - | 80 | 255 | 1.6 | 15 |
| ʼ 2 | ʼ | 13 | 10 | - | 80 | 255 | 1.6 | 15 |
| Example 10 | ʼ | 13 | 10 | - | 80 | 255 | 1.6 | 15 |
| ʼ 11 | Unoriented PET | 12 | 10 | - | 80 | 255 | 1.6 | 15 |
| Example 12 | PET -PP | 13 | 5 | - | 64 | 170 | 1.6 | 15 |
| Example 13 | PPS | - | - | 50 | 240 | 290 | 1.6 | 15 |

1) PET: polyethylene terephthalate

PP : polypropylene

PPS: polyphenylene sulfide

Table 3

| | Pressing conditions | | | Sheet | | | | |
|---|---|---|---|---|---|---|---|---|
| | Temp | Pres-sure | Time | Spe-cific sur-face area | Coeff. of volume expan-sion | Bulk den-sity | Break-ing length | Thick-ness |
| | (℃) | (kg/cm²) | (min) | (m²/g) | (%) | (g/cm³) | (km) | (mm) |
| Ex. 1 | 255 | 8 | 3 | 1170 | 380 | 0.23 | 0.29 | 0.75 |
| " 2 | 270 | 8 | 2.5 | 1280 | 450 | 0.28 | 0.27 | 0.70 |
| " 3 | 270 | 9 | 2.5 | 1900 | 390 | 0.25 | 0.25 | 0.75 |
| " 4 | 255 | 0.5 | 2 | 1050 | 200 | 0.29 | 0.60 | 0.60 |
| " 5 | 255 | 8 | 3 | 560 | 380 | 0.23 | 0.29 | 0.75 |
| " 6 | 255 | 8 | 3 | 1200 | 390 | 0.27 | 0.30 | 0.73 |
| " 7 | 255 | 7 | 2.5 | 1180 | 300 | 0.22 | 0.25 | 0.77 |
| " 8 | 255 | 8 | 3 | 1170 | 400 | 0.23 | 0.29 | 0.76 |
| " 9 | 120 | 12 | 0.5 | 1200 | 140 | 0.18 | 0.50 | 0.94 |
| Comp. Ex. 1 | 275 | 0.05 | 3 | 1180 | 120 | 0.045 | 0.08 | 3.60 |
| " 2 | 270 | 8 | 2.5 | 1160 | 120 | 0.43 | 0.05 | 0.40 |
| Ex.10 | 255 | 8 | 3 | 1170 | 450 | 0.23 | 0.29 | 0.76 |
| Ex.11 | 120 | 1 | 1 | 1190 | 300 | 0.23 | 0.27 | 0.74 |
| Ex.12 | 180 | 8 | 3 | 1170 | 200 | 0.24 | 0.25 | 0.70 |
| Ex.13 | 300 | 5 | 2 | 1170 | 350 | 0.26 | 0.30 | 0.65 |

Table 4

| | | Expansion conditions | | | Article | | | |
|---|---|---|---|---|---|---|---|---|
| | | Temp. | Time | Ratio of expansion | Porosity | Bulk density | adsorption capacity | Retention of adsorption capacity |
| | | (℃) | (min) | (%) | (%) | (g/cm³) | (% by weight) | (%) |
| Example | 1 | 255 | 3 | 270 | 93 | 0.09 | 35 | 92 |
| ″ | 2 | 280 | 2.5 | 430 | 95 | 0.065 | 39 | 96 |
| ″ | 3 | 260 | 3 | 130 | 83 | 0.19 | 62 | 98 |
| ″ | 4 | 245 | 10 | 190 | 85 | 0.17 | 36 | 67 |
| ″ | 5 | 255 | 3 | 270 | 93 | 0.09 | 16 | 94 |
| ″ | 6 | 255 | 3 | 270 | 92 | 0.10 | 35 | 92 |
| ″ | 7 | 255 | 3 | 270 | 93 | 0.09 | 35 | 92 |
| ″ | 8 | 260 | 2.5 | 390 | 93 | 0.06 | 35 | 92 |
| ″ | 9 | 255 | 3 | 130 | 88 | 0.14 | 38 | 88 |
| ″ | 10 | 255 | 3 | 390 | 96 | 0.06 | 47 | 92 |
| ″ | 11 | 255 | 3 | 135 | 86 | 0.17 | 35 | 92 |
| ″ | 12 | 200 | 3 | 285 | 93 | 0.08 | 36 | 94 |
| ″ | 13 | 300 | 2.5 | 310 | 93 | 0.08 | 34 | 89 |

Example 14

The same sheet as obtained in Example 1 was wrapped in such a number of plies as to make the expansion ratio after heating 1.53, around a hollow metal cylinder having an outside diameter of 3 cm. The cylinder with the laminated sheet was coaxially inserted into a hollow metal cylinder having an inside diameter of 7 cm and fixed therein by fitting a ring-shaped cap on each end of the cylinders. The laminated sheet was expanded by heating the two cylinders at 260°C for 20 minutes and then cooling them gradually to room temperature, to give a cylindrically expanded article with its inner and outer surfaces closely contacting the surfaces of the two cylinders. The hollow cylindrical article was taken out from the cylinders. The article had a bulk density of 0.15 g/cm³.

The article was maintained in the air at 150°C for 30 minutes and inspected for the shape, which showed no change, thus proving its good thermal resistance. A water purifier was fabricated using this cylindrical article. Through the purifier, tap water adjusted to contain 2 ppm of residual chlorine was passed at a space velocity of 1700 hr⁻¹, while the residual chlorine concentration at the outlet was monitored at intervals. The volume of water having passed until the residual chlorine decomposition ratio reached 80% was 230 l/g-cylindrical article. This results shows that the article exhibited sufficient decomposition capacity to be usable in practice as an adsorbent material for water purifier.

Example 15

The same sheet as obtained in Example 1 was slit into a width of 8.5 cm. The strips thus slit were, in such a number of plies as to make the expansion ratio after heating 1.28, wrapped around a hollow perforated-metal cylinder having an outside diameter of 3.5 cm (length: 8.5 cm, wall thickness: 0.06 cm). The cylinder with the strips was inserted into a larger hollow perforated-metal cylinder having an inside diameter of 6.5 cm (length: 8.5 cm, wall thickness: 0.06 cm). The two cylinders were coaxially fixed by fitting a ring-shaped cap on each end of the cylinders. Thus, a container housing the cylindrical laminate of the sheet was fabricated. The container was heated at 260°C for 15 minutes and then gradually cooled to room temperature, whereby the cylindrical laminate expanded into a cylindrically expanded aggregate of ACF, to give a cartridge comprising the two cylinders and the expanded ACF aggregate fitting closely between the cylinders. The bulk density of the ACF aggregate was calculated from the volume of the space between the cylinders and the weight of the sheet, to give 0.18 g/cm$^3$.

A water purifier was fabricated using this cartridge. Through the purifier, tap water adjusted to contain 2 ppm of residual chlorine was passed at a space velocity of 1200 hr$^{-1}$, while the residual chlorine concentration at the outlet was monitored at intervals. The volume of water having passed until the residual chlorine decomposition ratio reached 80% was 10,600 liters. This result shows that the cartridge exhibited sufficient decomposition capacity to be usable in practice as an adsorbent article for water purifier.

Obviously, numerous modifications and variations of the present invention are possible in light of the above teachings. It is therefore to be understood that within the scope of the appended claims, the invention may be practiced otherwise than as specifically described herein.

**Claims**

1. A sheet having a specific surface area of at least 300 m$^2$/g and a coefficient of volume expansion of at least 130% and comprising an activated carbon fiber and a fibrous or particulate thermoplastic resin, individual fibers of said activated carbon fiber being bonded to each other via said thermoplastic resin.

2. A process for producing a sheet having a specific surface area of at least 300 m$^2$/g and a coefficient of volume expansion of at least 130% and comprising an activated carbon fiber and a fibrous or particulate thermoplastic resin, individual fibers of said activated carbon fiber being bonded to each other via said thermoplastic resin, which comprises:

    mixing an activated carbon fiber and a fibrous or particulate thermoplastic resin,
    compressing the mixture at a temperature of at least the thermal deformation temperature of said thermoplastic resin and under a pressure per area of at least 0.1 kg/cm$^2$ or a linear pressure of at least 1.0 kg/cm, to obtain a flat, compressed article, and
    cooling the flat, compressed article under pressure.

3. A process for producing an article which comprises expanding a primary shaped article having a specific surface area of at least 300 m$^2$/g and a coefficient of volume expansion of at least 130% and comprising an activated carbon fiber and a fibrous or particulate thermoplastic resin, individual fibers of said activated carbon fiber being bonded to each other via said thermoplastic resin, by heating said primary shaped article at a temperature of at least the thermal deformation temperature of said thermoplastic resin.

4. A process according to Claim 3, wherein said primary shaped article is expanded in a container.

5. A process according to Claim 3, wherein said primary shaped article is a sheet or processed products thereof.

6. The article obtained by the process of any one of Claims 3 to 5.

7. An adsorbent material comprising the article of Claim 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 495 030 (GIGLIA) <br> * column 3; examples 1-3 * | 1,2 | B01J20/28 <br> B01J20/20 |
| D,Y | US-A-4 808 202 (NISHIKAWA) <br> * column 11 - column 12; claims 1-15 * | 1 | |
| Y | EP-A-0 159 696 (PALL CORP.) <br> * page 22 - page 26; claims 1-20 * | 1 | |
| A | * page 11, line 10 - page 15, line 28 * | 2 | |
| A | US-A-3 375 933 (RODMAN) <br> * column 2, line 29 - column 6, line 39 * | 3,4,6,7 | |
| A | DE-A-3 735 729 (DITTRICH) <br> * column 3 - column 4; claims 1-7 * | 1,2,3 | |
| A | GB-A-2 024 886 (KLEIN) | | |
| A | EP-A-0 231 105 (BRASSEL) <br> * page 3, line 25 - page 6, line 21 * | 1 | |

TECHNICAL FIELDS SEARCHED (Int. Cl.5)

B01J
C01B
D04H
B01D

The present search report has been drawn up for all claims

| Place of search | Date of completion of the search | Examiner |
|---|---|---|
| THE HAGUE | 25 SEPTEMBER 1992 | WENDLING J.P. |